# FASCICULE DE BREVET EUROPEEN

(11) **EP 4 622 612 B1**
(45) Date de publication et mention de la délivrance du brevet: **30.09.2026**
(21) Numéro de dépôt: 23809599.6
(22) Date de dépôt: 21.11.2023
(51) Int. Cl.: A61G 5/04, A61G 5/10, B60B 33/00, B60B 33/02, B60K 7/00

(54) **SYSTEME D'ASSISTANCE POUR FAUTEUIL ROULANT MANUEL**
ASSISTENZSYSTEM FÜR EINEN MANUELLEN ROLLSTUHL
ASSISTANCE SYSTEM FOR A MANUAL WHEELCHAIR

(30) Priorité: 21.11.2022 FR 2212065
(43) Date de publication de la demande: 01.10.2025
(73) Titulaire: Upeak, 60200 Compiègne (FR)
(72) Inventeur: PIERRAT, Valentin, 77165 Saint-Soupplets (FR); GAVROY, Valentin, 92170 Vanves (FR)
(74) Mandataire: Oak & Fox
(86) Numéro de dépôt international: PCT/EP2023/082610
(87) Numéro de publication internationale: WO 2024/110495

(56) Documents cités:
- EP-A2- 1 878 416
- DE-A1- 102018 122 368
- US-B1- 8 684 113

## Description

### Domaine de l'invention

L'invention concerne le domaine des dispositifs d'aide aux personnes à mobilité réduite. Plus précisément, l'invention concerne le domaine des fauteuils roulants manuels et électriques. L'invention concerne de l'assistance au déplacement des personnes à mobilité réduite, les personnes temporairement invalides et des personnes âgées.

### État de la technique

Sont connus de l'état de la technique des fauteuils roulants manuels. Un fauteuil roulant manuel est un dispositif aidant les personnes à mobilité réduite à se déplacer. Plus précisément, un fauteuil roulant manuel comporte une assise sur laquelle l'utilisateur s'assoit et un dossier permettant de soutenir le dos de l'utilisateur. Le fauteuil roulant comprend également deux roues principales situées sur les côtés du fauteuil comprenant des poignées permettant à l'utilisateur de tourner les roues pour propulser le fauteuil, le freiner lorsqu'il prend de la vitesse, ou pour le diriger. De tels fauteuils sont bien connus et efficaces pour permettre à des personnes à mobilité réduite, des personnes âgées ou des personnes temporairement invalides, de se déplacer. De tels fauteuils sont généralement pliables ou modulaires pour permettre par exemple un transport dans le coffre d'une voiture ou un rangement compact. Toutefois, ils présentent plusieurs inconvénients. Premièrement, de tels fauteuils ne sont indiqués que pour des personnes ayant des troubles agissant sur les membres inférieurs du corps, les bras de l'utilisateur étant utilisés pour la propulsion du fauteuil. Deuxièmement, de tels fauteuils sont très inconfortables lorsqu'ils sont utilisés sur des sols en pente, la propulsion du fauteuil dans une montée demandant beaucoup d'énergie à l'utilisateur. Enfin, l'utilisation de la propulsion manuelle peut générer des troubles musculosquelettiques tels des tendinites pour les utilisateurs réguliers de tels fauteuils. Il existe également des fauteuils roulants électriques. De tels fauteuils roulants comportent généralement un moteur électrique et une batterie intégrée dans un châssis, lesquels sont en général relativement lourds. Le fauteuil comporte un dispositif de commande, généralement sous forme de manche à balai, autrement appelé « joystick », permettant à l'utilisateur de contrôler le moteur électrique du fauteuil. Un tel dispositif permet le contrôle du ou des moteurs afin de faire avancer le fauteuil et de freiner le fauteuil. Un tel fauteuil permet de surmonter certains des inconvénients de l'art antérieur existant en permettant un déplacement motorisé adapté à plus de personnes à mobilité réduite, et facilitant le déplacement sur des sols en pente. Toutefois, un tel dispositif reste très lourd et très encombrant. Par exemple, lorsque l'on souhaite déplacer le fauteuil et son occupant, celui-ci est difficilement repliable, ce qui nécessite d'avoir un véhicule adapté avec un grand espace de stockage et une rampe d'accès pour monter le fauteuil à bord dudit véhicule. De même, de tels fauteuils ne permettent pas le déplacement manuel, notamment lorsque la batterie est vide et ne permet plus d'alimenter le moteur du fauteuil. De tels fauteuils sont également très onéreux.

Un des objets de l'invention est de surmonter les inconvénients de l'art antérieur.

Les documents EP1878416 A2 et US 8 684 113 B1 et DE 10 2018 122 368 A1 divulguent des systèmes d'assistance pour fauteuils roulants manuels.

### Résumé de l'invention

L'invention concerne un système d'assistance pour fauteuil roulant manuel qui comporte une base de fixation configurée pour être fixée sur un cadre de fauteuil roulant manuel et un module moteur, ledit module moteur comportant :
- un boitier comportant au moins un moyen de fixation amovible configuré pour coopérer avec un moyen d'attache de la base de fixation ;
- une batterie ;
- une roue fixée en translation par rapport au boitier ;
- au moins un premier moteur électrique.

La roue est entrainée en rotation selon un premier axe de rotation et selon un second axe de rotation perpendiculaire au premier axe de rotation.

Le système comporte un moyen de contrôle du premier moteur.

Le premier moteur est configuré pour entrainer la roue en rotation selon le premier axe de rotation.

Le système d'assistance comporte en outre un second moteur électrique configuré pour entrainer la roue en rotation selon le second axe de rotation.

Avantageusement, le moyen de contrôle est un moyen de contrôle du second moteur.

Le système d'assistance selon l'invention permet donc de motoriser un fauteuil roulant manuel en fixant le moyen de fixation amovible du boitier sur le moyen d'attache de la base de fixation. De cette manière, le système est amovible sur un fauteuil roulant manuel, ce qui permet un retrait et un ajout du système sur le fauteuil de manière simple et rapide, ce qui permet de facilement enchainer une utilisation motorisée du fauteuil et une utilisation manuelle. De la même manière, le dispositif selon l'invention est léger, ce qui permet un transport facile du système et du fauteuil. De plus, la facilité de démontage du système permet un rangement et un déplacement facile du fauteuil, par exemple dans un coffre d'une voiture.

Selon un mode de réalisation, la roue est destinée à être en contact avec une surface d'un sol sur lequel le fauteuil roulant est posé lorsque le boitier est attaché à la base de fixation.

Selon un mode de réalisation, la roue est en contact avec une surface d'un sol sur lequel le fauteuil roulant est posé lorsque le boitier est attaché à la base de fixation.

Selon un mode de réalisation, la roue est connectée mécaniquement au boitier avec au moins deux degrés de liberté en rotation.

Selon un mode de réalisation, le premier moteur électrique est configuré pour entrainer en rotation la roue selon le premier axe de rotation, le système d'assistance comportant en outre un second moteur électrique configuré pour entrainer la roue en rotation selon le second axe de rotation.

Selon un mode de réalisation le premier moteur est intégré à la roue.

Selon un mode de réalisation, le second moteur est intégré au boitier.

Selon un mode de réalisation, le moyen de fixation amovible comporte au moins un crochet, et dans lequel le moyen d'attache comporte au moins une tige configurée pour coopérer avec le crochet et pour effectuer la fixation amovible.

Selon un mode de réalisation, le moyen de fixation amovible comporte au moins un crochet, le moyen d'attache comporte au moins une tige configurée pour coopérer avec le crochet de sorte à lier le moyen de fixation amovible et le moyen d'attache de façon amovible.

Selon un mode de réalisation, le premier axe de rotation de la roue est perpendiculaire à un plan principal de ladite roue, et dans lequel le premier moteur électrique est asservi pour permettre la propulsion et le freinage de la roue.

Selon un mode de réalisation, le premier moteur électrique permet le recul du fauteuil sur lequel il est fixé. En d'autres termes, le premier moteur électrique est configuré pour permettre d'entrainer la roue en rotation autour du premier axe de rotation par rapport au boitier dans un premier sens et dans un deuxième sens.

Selon un mode de réalisation, le premier axe de rotation de la roue est perpendiculaire à un plan principal de ladite roue, et le premier moteur électrique est asservi en vitesse, en position et/ou en couple pour entrainer la roue en rotation autour du premier axe de rotation par rapport au boitier dans un premier sens et/ou dans un deuxième sens opposé au premier sens.

Selon un mode de réalisation, le freinage par le premier moteur est un freinage régénératif permettant la recharge de la batterie du système d'assistance.

Selon un mode de réalisation le système d'assistance comporte un contrôleur commandant la rotation et/ou le freinage du premier moteur.

Autrement dit, le contrôleur est configuré pour commander la rotation et/ou le freinage du premier moteur.

Selon un mode de réalisation, le système comprend un contrôleur et un ensemble d'au moins un capteur comprenant au moins un capteur de vitesse de rotation et/ou de couple et/ou de position angulaire de la roue autour du premier axe par rapport au boitier, le contrôleur recevant au moins une information d'au moins un capteur de l'ensemble et étant configuré pour contrôler le premier moteur en fonction de ladite au moins une information.

Selon un mode de réalisation, le moyen de fixation amovible et/ou le moyen d'attache comporte au moins un aimant configuré pour maintenir un contact entre un contacteur du moyen d'attache et un contacteur du moyen de fixation amovible.

Selon un mode de réalisation, le contrôleur comporte une interface utilisateur comprenant des moyens de contrôle de la propulsion et/ou du freinage du système d'assistance.

Selon un mode de réalisation, le système comprend une interface utilisateur permettant à un utilisateur d'envoyer au moins une valeur consigne, le contrôleur étant configuré pour commander le fonctionnement du premier moteur en fonction de la valeur consigne.

L'invention concerne également un fauteuil roulant manuel qui comporte un système d'assistance selon l'invention et dans lequel la base de fixation est fixée sur un cadre du fauteuil roulant manuel.

### Brève description des figures

D'autres caractéristiques et avantages de l'invention ressortiront à la lecture de la description détaillée qui suit, en référence aux figures annexées, qui illustrent :
Fig. 1 : une vue en perspective d'un système d'assistance pour fauteuil roulant manuel selon un mode de réalisation de l'invention.
Fig. 2 : une vue en perspective d'un module moteur du système d'assistance pour fauteuil roulant manuel selon le mode de réalisation de la figure 1.
Fig. 3 : une vue de face du module moteur du système d'assistance pour fauteuil roulant manuel selon le mode de réalisation de la figure 1.
Fig. 4 : une vue de profil du module moteur du système d'assistance pour fauteuil roulant manuel selon le mode de réalisation de la figure 1.
Fig. 5 : une vue en perspective d'une base de fixation du système d'assistance pour fauteuil roulant manuel selon le mode de réalisation de la figure 1.
Fig. 6 : une vue en perspective d'un fauteuil roulant manuel équipé d'un système d'assistance selon un mode de réalisation de l'invention.
Fig. 7 : une vue en perspective d'un détail de la figure 4.
Fig. 8 : une vue en perspective d'un module moteur du système d'assistance selon un mode de réalisation de l'invention auquel manque une partie du boitier.
Fig. 9 : une vue en perspective d'un moyen de fixation amovible du système d'assistance fixé sur un fauteuil selon un mode de réalisation de l'invention.
Fig. 10: une vue en perspective d'une base de fixation du système d'assistance selon un mode de réalisation de l'invention.
Fig. 11 : une vue de profil d'un moyen de fixation amovible selon un mode de réalisation de l'invention.

### Description de l'invention

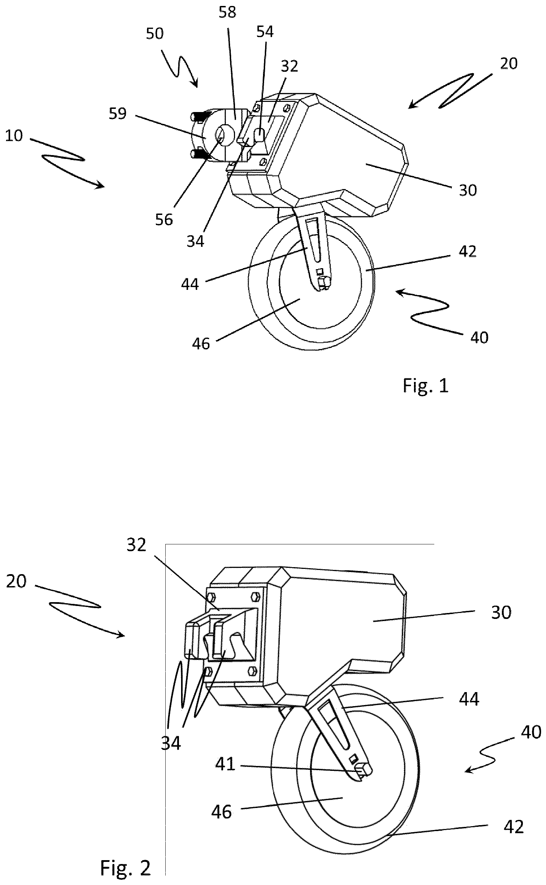

La figure 1 représente un mode de réalisation d'un système d'assistance 10 pour un fauteuil roulant manuel. Le système d'assistance est dans cette figure représenté en perspective.

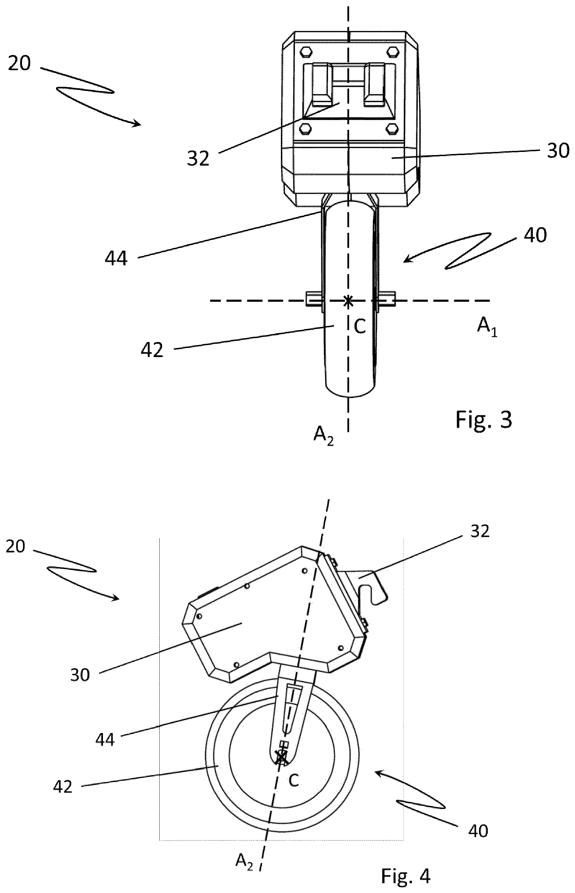

Le système d'assistance 10 selon l'invention comporte un module moteur 20. Les figures 2, 3 et 4 représentent le module moteur 20 en perspective. Le module moteur 20 comporte un boitier 30. Le boitier 30, comporte une enveloppe rigide protégeant au moins un ou plusieurs composants se situant à l'intérieur de celui-ci. Par boitier 30 on entend aussi un bâti du module moteur 20.

Le boitier 30 du module moteur comporte au moins un moyen de fixation amovible 32.

Autrement dit, le module moteur 20 comporte avantageusement un moyen de fixation, c'est-à-dire une première attache.

Ce moyen de fixation est fixe par rapport au boîtier 30.

Ce moyen de fixation amovible 32 est de préférence fixé sur une surface externe du boitier 30.

Selon un mode de réalisation le moyen de fixation amovible 32 est intégré au boitier 30. Le système d'assistance 10 comporte une roue 40.

La roue 40 comporte de préférence un pneu 42. Par pneu 42, on entend un bandage circulaire formé de gomme et autres matériaux textiles et/ou métalliques. Alternativement, le pneu 42 peut être réalisé en matière plastique. Le pneu peut être gonflé avec de l'air par exemple ou bien être plein.

La roue 40 comporte une forme générale de disque.

La roue 40 comporte donc un plan principal, plan dans lequel les rayons du disque formé par ladite roue 40 sont compris.

La roue 40 est fixée en translation par rapport au boitier 30.

Par fixe en translation, on entend que la roue 40 ne peut pas se déplacer en translation selon un axe de translation par rapport au boitier 30.

Le module moteur 20 du système d'assistance 10 comporte au moins un premier moteur électrique 46.

Le premier moteur électrique 46 est configuré pour transformer de l'énergie électrique en mouvement de rotation. En d'autres termes, le premier moteur 46 est configuré pour fournir de l'énergie mécanique au système d'assistance 10. Le système d'assistance 10 comporte une batterie. Par batterie, on entend tout système d'accumulation de l'énergie électrique. Une batterie peut donc être une pile ou un accumulateur. La batterie est configurée pour alimenter électriquement au moins le premier moteur électrique 46.

Le système d'assistance 10 comporte une base de fixation 50. La base de fixation 50 est configurée pour être fixée sur un fauteuil roulant 60. Préférentiellement, la base de fixation 50 est configurée pour être fixée sur un cadre 62 de fauteuil roulant 60, mais peut être fixée sur toute autre partie du fauteuil roulant 60.

Le fauteuil roulant comprend des roues principales 64 destinées à tourner autour d'un axe de rotation par rapport au cadre 62 de façon à faire avancer le fauteuil roulant le long d'un axe d'avancement du fauteuil.

Avantageusement, l'axe d'avancement du fauteuil est perpendiculaire à l'axe de rotation des roues principales du fauteuil roulant.

Préférentiellement, la base de fixation 50 est fixée sur un fauteuil roulant manuel 60.

La base de fixation 50 peut également, de même que le système d'assistance 10 tout entier, être fixée sur un fauteuil roulant qui n'est pas manuel, par exemple un fauteuil roulant déjà motorisé. Additionnellement, le système peut être fixé sur tout type de moyen de déplacement ou de manutention, tel un chariot par exemple.

Avantageusement, la base de fixation 50 est destinée à être fixée de façon amovible au boitier 30.

La base de fixation 50 comporte un moyen d'attache 52 ou deuxième attache. Par moyen d'attache 52 ou deuxième attache, on entend tout moyen sur lequel le moyen de fixation amovible 32 du boitier 30 ou fixe par rapport au boîtier peut s'attacher, se fixer, dans le but de lier le boitier à ladite base de fixation 50.

Par lier le boitier à la base de fixation on entend effectuer une liaison mécanique.

Avantageusement, le moyen d'attache 52 et le moyen de fixation amovible 32 sont destinés à coopérer pour établir une liaison pivot entre la base de fixation 50 et le module moteur 20.

Avantageusement, la liaison pivot permet une rotation du module moteur 20 par rapport à la base de fixation 50 autour d'un axe parallèle à l'axe de rotation des roues principales 64 du fauteuil roulant 60 sur lequel est installé le système 10.

Par fixation amovible, on entend une liaison effectuée entre le moyen de fixation amovible 32 et la base de fixation 50 qui permet de lier ces deux éléments, tout en gardant la possibilité de facilement séparer lesdits éléments.

Autrement dit, le moyen de fixation amovible 32 est destiné à coopérer avec le moyen d'attache 52 pour lier le boîtier 30 à la base de fixation 50 de façon amovible.

En d'autres termes, il est possible d'installer et de désinstaller facilement le module moteur 20 sur la base de fixation 50.

Avantageusement, le moyen d'attache 52 de la base de fixation 50 permet un mouvement de rotation du module moteur 20 permettant un mouvement vertical de la roue 40, relativement à un sol sur lequel le fauteuil repose. De cette manière, cette rotation permet un mouvement de la roue 40 permettant de surélever le module moteur 20 pour passer des obstacles qui seraient sur son chemin. Cette rotation est permise par la liaison pivot formée par le moyen de fixation amovible 32 et le moyen d'attache 52 entre la base de fixation 50 et le module moteur 20.

Préférentiellement, la base de fixation 50 est fixée de manière solidaire au cadre 62 du fauteuil roulant 60.

Avantageusement, cette base de fixation 50 est démontable par rapport au cadre du fauteuil roulant 60.

Autrement dit, la base de fixation est destinée à être fixée de façon démontable au cadre 62 du fauteuil roulant 60.

En d'autres termes, la fixation de la base de fixation 50 n'endommage pas le cadre 62 du fauteuil roulant 60.

La roue 40 est en contact avec la surface d'un sol sur lequel est le fauteuil roulant 60 lorsque le système est installé sur le fauteuil roulant 60.

Autrement dit, le système 100 est avantageusement configuré de sorte à être monté sur le cadre 62 du fauteuil roulant 60 de sorte que la roue 40 soit en contact physique direct avec le sol sur lequel le fauteuil roulant 60 repose.

La roue 40 est mobile en rotation par rapport au boitier 30 selon un premier axe de rotation A₁.

Par rotation selon un axe, on entend, dans la présente demande de brevet, rotation autour d'un axe.

Le premier axe de rotation A₁ est sensiblement perpendiculaire à un plan principal de la roue 40.

Le plan principal de la roue 40 a été défini précédemment.

De préférence, le premier axe de rotation A₁ passe par un point C qui est sensiblement le centre de la roue 40.

La roue est entrainée en rotation selon le premier axe de rotation A₁ par le système d'assistance 10.

Plus précisément, le premier moteur 46 est destiné à entraîner la roue en rotation autour du premier axe de rotation A1 par rapport au boîtier 30.

Cette rotation de la roue 40 selon le premier axe A₁ permet une propulsion d'un fauteuil roulant manuel 60 sur lequel serait installé le système d'assistance 10.

Avantageusement, l'axe de rotation A₁ est destinée à être parallèle à un axe de rotation des roues principales 64 du fauteuil roulant 60 lorsque le système 10 est installé sur le fauteuil 60.

De la même manière, cet entrainement en rotation de la roue 40 permet un freinage du fauteuil 60 lorsque celui-ci a déjà un mouvement de translation.

La roue 40 est mobile en rotation par rapport au boitier 30 selon un deuxième axe de rotation A₂.

Avantageusement, le deuxième axe de rotation A₂ est perpendiculaire au premier axe de rotation A₁.

En d'autres termes, le deuxième axe de rotation A₂ est compris dans le plan principal de la roue 40.

Ainsi, une rotation de la roue 40 selon le deuxième axe de rotation A₂ permet un pivotement du plan principal de ladite roue 40.

Cette rotation de la roue 40 autour du deuxième axe de rotation est réalisée par rapport au boîtier 30.

Ainsi, lorsque le système est installé sur un fauteuil roulant 60 et que celui-ci avance, la rotation de la roue selon le deuxième axe de rotation A₂ permet un pivotement de son plan principal de manière que celui-ci ne soit pas aligné avec le mouvement du fauteuil 60. De ce fait, la rotation de la roue 40 selon le deuxième axe de rotation A₂ permet de faire tourner le fauteuil lorsque celui-ci avance. En d'autres termes, cette rotation permet de faire passer le fauteuil 60 d'un mouvement rectiligne à un mouvement circulaire. Le système selon l'invention permet de manière avantageuse une fixation amovible sur un fauteuil roulant.

Autrement dit, le système 10 ou dispositif 10 est destiné à être fixé de façon amovible sur un cadre 62 d'un fauteuil roulant 60.

De cette manière, le système peut être retiré lorsque l'utilisateur ne souhaite pas avoir de motorisation sur son fauteuil roulant, et être replacé lorsque le besoin de motorisation se fait sentir. De même, la possibilité de retirer la motorisation permet un stockage, notamment pour les déplacements, facilité du fauteuil. En effet, une fois le module moteur 20 retiré du fauteuil, ledit fauteuil peut être replié ou démonté normalement, par exemple pour être stocké dans un coffre de véhicule. De la même manière, le module moteur 20 peut facilement être stocké du fait de la possibilité d'être séparé du fauteuil. Enfin, le système selon l'invention permet une motorisation amovible qui permet à la fois une propulsion du fauteuil selon une trajectoire rectiligne et selon une trajectoire circulaire, en ajustant la direction de la propulsion. De cette manière, l'utilisateur peut facilement prendre des virages avec un fauteuil équipé du dispositif d'assistance, et ce sans avoir à agir avec ses membres supérieurs sur les roues latérales du fauteuil.

Selon un mode de réalisation, le système permet de propulser le fauteuil selon un premier sens et selon un deuxième sens le long d'un axe perpendiculaire au premier axe A₁ lorsque le système est monté sur le fauteuil 60.

En d'autres termes, le système selon l'invention permet d'actionner une marche avant du fauteuil et une marche arrière du fauteuil.

Selon un mode de réalisation, le premier moteur électrique permet le recul du fauteuil 60 sur lequel il est fixé.

En d'autres termes, le premier moteur électrique 46 est apte à entrainer la rotation de la roue 40 autour du premier axe de rotation A₁ par rapport au boitier 30 selon un premier sens et selon un deuxième sens inverse au premier sens.

### Motorisation

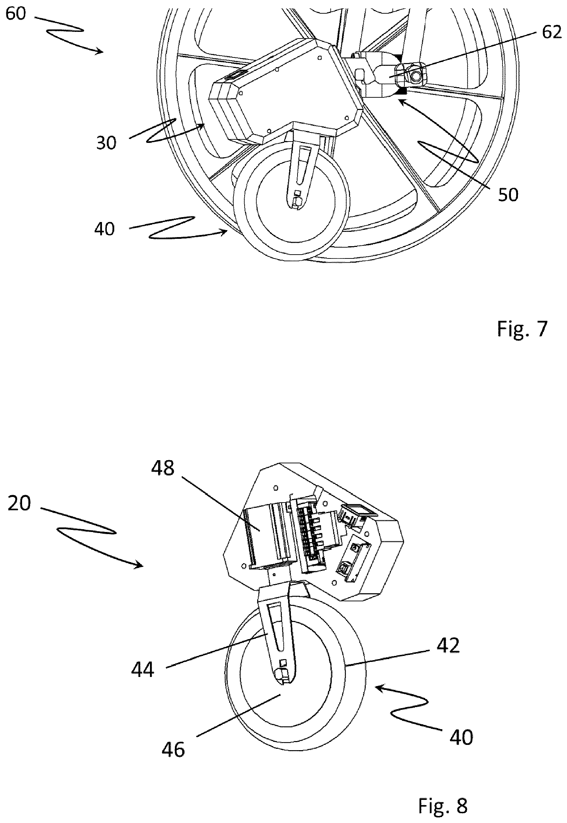

Selon un mode de réalisation, le système 10 comporte un deuxième moteur électrique 48. Le deuxième moteur électrique 48 est visible sur la figure 8, qui est une vue en perspective du module moteur 20 dans son boitier 30, ledit boitier 30 étant ouvert.

Selon ce mode de réalisation, le deuxième moteur électrique 48 entraine la rotation de la roue 40 selon le deuxième axe de rotation.

C'est donc, selon ce mode de réalisation, le second moteur 48 qui permet d'actionner une trajectoire circulaire du fauteuil 60 lorsque celui-ci est en mouvement par un pivotement de la roue 40.

Selon un mode de réalisation, le premier moteur électrique 46 effectue la rotation selon le premier axe de rotation A₁ uniquement. C'est selon ce mode de réalisation le premier moteur 46 qui propulse le fauteuil roulant 60 par rotation de la roue 40.

Selon un mode de réalisation, le premier moteur électrique 46 est intégré à la roue 40.

En d'autres termes, le premier moteur électrique 46 est situé dans la roue 40, entre le premier axe de rotation A₁ et le pneu de ladite roue 40. De cette manière, le système est plus compact qu'un système avec un moteur déporté. De même, cette présence du moteur intégré à la roue 40 permet de se passer de système de transmission, ce qui permet d'alléger le système et d'en réduire le coût.

Selon un mode de réalisation, le premier moteur 46 est un moteur à courant continu.

Selon un mode de réalisation, le premier moteur électrique est un moteur sans balais, autrement appelé moteur « brushless ». Les moteurs sans balais sont fiables et permettent de diminuer les opérations de maintenance sur ledit moteur par rapport à un moteur avec balais.

Selon un mode de réalisation, le deuxième moteur 48 est situé dans le boitier 30. De cette manière, le deuxième moteur est placé de manière à pouvoir facilement contrôler la rotation selon le deuxième axe de rotation A₂.

Selon un mode de réalisation, le deuxième moteur 48 entraîne directement en rotation la roue selon le deuxième axe de rotation A₂.

Par entraînement direct en rotation on entend qu'un arbre moteur du deuxième moteur est lié à la roue 40 de sorte que l'arbre du moteur tourne à une même vitesse que la roue 40 autour du deuxième axe de rotation A₂.

Selon un mode de réalisation, le module moteur 20 comporte une fourche 44. La fourche 44 permet de lier la roue 40 et le boitier 30 du module moteur 20.

Avantageusement, la fourche 44 est liée au boitier 30 par une liaison pivot. Cette liaison pivot permet une rotation de la fourche par rapport au boitier 30 autour du deuxième axe de rotation A₂.

Avantageusement, la fourche 44 est liée à la roue 40 par une liaison pivot. Cette liaison pivot permet une rotation de la roue 40 par rapport à la fourche 44 autour de l'axe A₁.

De préférence, la fourche 44 comporte deux bras, chacun étant lié à un arbre de rotation 41 de la roue 40 au niveau du premier axe de rotation A₁.

Les deux bras enserrent la roue 40.

Selon une variante, la fourche 44 ne comporte qu'un seul bras.

Selon un mode de réalisation, le deuxième moteur 48 est lié directement en rotation à la fourche 44 de la roue 40.

En d'autres termes, le deuxième moteur 48 entraîne directement la rotation de fourche 44 par rapport au boitier autour du deuxième axe A₂.

Cette disposition permet d'entrainer directement la rotation de la roue 40 selon le deuxième axe de rotation A₂.

Selon un mode de réalisation, un réducteur est placé entre la roue 40 et le second moteur 48. En d'autres termes, le réducteur permet une adaptation de la vitesse de rotation fournie par le second moteur 48 pour l'adapter à la rotation de la roue 40 selon le second axe de rotation A₂. De ce fait, la vitesse de rotation peut être adaptée pour imprimer le mouvement souhaité à la fourche 44 lorsque l'on souhaite que le fauteuil roulant tourne.

Selon un mode de réalisation, le module moteur 20 du système 10 comprend la batterie.

Selon un mode de réalisation, le boitier 30 du module 20 du système 10 comprend la batterie. Selon ce mode de réalisation, la batterie est intégrée dans le boitier 30 et est solidaire de celui-ci.

Selon un mode de réalisation, la batterie est démontable du module moteur 20.

Cette caractéristique permet un changement rapide de la batterie. Selon un mode de réalisation, la batterie est amovible sur le boitier 30.

De cette manière, la batterie peut facilement être retirée et remise sur le module moteur 20. Ainsi, lorsque la batterie est à court d'énergie électrique, celle-ci peut facilement être remplacée par une batterie qui est chargée. On peut donc recharger la batterie et continuer à utiliser le système 10 selon l'invention.

Selon un mode de réalisation, le module moteur 20 comprend une connexion électrique. La connexion électrique permet un branchement de la batterie avec une source d'énergie. Ce branchement permet un rechargement de la batterie.

Selon un mode de réalisation, la connexion électrique du boitier 30 comporte au moins un aimant configuré pour coopérer avec un aimant d'un câble de connexion. De cette manière, lorsque l'on branche le câble à la connexion électrique, celui-ci est maintenu dans la connexion par interaction magnétique. De la même manière, un arrachement brusque du câble de la connexion est possible sans endommager le câble et/ou la connexion électrique.

Selon un mode de réalisation, la connexion électrique du boitier 30 comporte au moins une connexion de type USB-C. Ce type de connexion permet avantageusement le transfert de données d'un ordinateur et/ou téléphone portable au boitier 30. Par exemple, cela peut permettre de faire des mises à jour d'un logiciel de contrôle du système d'assistance 10. La connexion peut être réalisée par tout type de connexion électrique qui sera envisagée par l'homme du métier, plus particulièrement par tout type de connexion permettant le transfert d'énergie électrique et le transfert de données.

Selon un mode de réalisation, le premier moteur 46 est asservi électriquement.

Le système comprend avantageusement au moins un contrôleur configuré pour effectuer l'asservissement du premier moteur 46.

De façon générale, le contrôleur est configuré pour effectuer les asservissements décrits dans la présente demande de brevet.

Le système comprend avantageusement un ensemble d'au moins un capteur de mesure d'une grandeur physique représentative d'un état du système.

Le système 10 est avantageusement configuré pour qu'une mesure d'une grandeur physique délivrée par au moins un capteur de l'ensemble soit transmise au contrôleur et pour que le contrôleur commande le premier moteur en fonction de ladite information.

Le système 10 est avantageusement configuré pour qu'une mesure d'une grandeur physique délivrée par au moins un capteur de l'ensemble soit transmise au contrôleur et pour que le contrôleur commande le premier moteur en fonction de ladite information et en fonction d'une valeur consigne de la grandeur physique.

L'asservissement du premier moteur électrique 46 permet un bon contrôle de son fonctionnement, et donc une stabilité dans la propulsion du système d'assistance 10.

Selon un mode de réalisation, le premier moteur 46 est asservi en vitesse. Un tel asservissement permet de contrôler précisément la vitesse de rotation du premier moteur 46, et donc par extension de contrôler précisément la vitesse d'avancée du fauteuil sur lequel le système d'assistance 10 est installé.

Le module moteur 46 comporte avantageusement un capteur de vitesse de rotation de la roue 40 autour de l'axe A₁ par rapport au boitier 30. La mesure de la vitesse de rotation est avantageusement transmise au contrôleur qui est configuré pour commander le moteur en fonction de cette mesure.

Selon un mode de réalisation, le premier moteur 46 est asservi en position.

Le module moteur 46 comporte avantageusement un capteur de position angulaire de la roue 40 autour de l'axe A₁.

La mesure de la position est transmise au contrôleur qui est configuré pour commander le moteur en fonction de cette mesure.

Selon un mode de réalisation, le premier moteur 46 est asservi en couple.

Le module moteur 46 comporte avantageusement un capteur de couple du premier moteur 46.

La mesure du couple est avantageusement transmise au contrôleur qui est configuré pour commander le moteur en fonction de cette mesure.

Selon un mode de réalisation, le premier moteur 46 est asservi en couple et en vitesse.

Selon un mode de réalisation, le premier moteur 46 est asservi en vitesse et en position.

Selon un mode de réalisation, le premier moteur 46 est asservi en couple et en position.

Selon un mode de réalisation, le premier moteur 46 est asservi en vitesse, en position et en couple.

Selon un mode de réalisation, le premier moteur 46 est configuré pour effectuer un freinage moteur.

Autrement dit, le premier moteur 46 est apte à fonctionner alternativement en moteur et en frein.

Le frein moteur permet de freiner le mouvement du fauteuil 60 lorsque le premier moteur 46 est actionné en frein.

L'utilisation du premier moteur 46 comme frein permet avantageusement de se passer d'un freinage mécanique utilisant des pièces d'usure qui nécessitent une maintenance.

Le freinage permet également à l'utilisateur du fauteuil roulant 60 d'emprunter des chemins en pente de manière sécurisée.

Selon un mode de réalisation, le freinage effectué par le premier moteur 60 est un freinage régénératif. Par freinage régénératif on entend une récupération de l'énergie électrique générée par le premier moteur 46 lors du freinage.

Autrement dit, le premier moteur 46 est apte à fonctionner alternativement en moteur et en générateur.

Avantageusement, l'énergie électrique générée par le freinage est utilisée pour recharger la batterie du système d'assistance 10. Cette disposition permet une augmentation de l'autonomie du système d'assistance 10.

Selon un mode de réalisation, le deuxième moteur 48 est asservi électriquement. L'asservissement du deuxième moteur électrique 48 permet un bon contrôle de son fonctionnement, et donc une stabilité dans le contrôle de la direction du système d'assistance 10. Selon un mode de réalisation, le deuxième moteur 48 est asservi en position. Un tel asservissement permet de contrôler précisément la position angulaire de l'arbre de rotation du deuxième moteur 48, et donc par extension de contrôler précisément l'orientation angulaire de la roue 40 selon deuxième axe de rotation A₂. Ainsi, on contrôle efficacement le rayon de braquage du fauteuil roulant 60 sur lequel est installé le système d'assistance 10. Selon un mode de réalisation, le deuxième moteur 48 est asservi en vitesse. Selon un mode de réalisation, le deuxième moteur 48 est asservi en couple. Selon un mode de réalisation, le deuxième moteur 48 est asservi en couple et en vitesse. Selon un mode de réalisation, le deuxième moteur 48 est asservi en vitesse et en position. Selon un mode de réalisation, le deuxième moteur 48 est asservi en couple et en position. Selon un mode de réalisation, le deuxième moteur 48 est asservi en vitesse, en position et en couple.

Selon un mode de réalisation, le rayon de braquage défini par l'orientation angulaire de la roue 40 selon le deuxième axe de rotation A₂ est changé selon la vitesse d'avancée du fauteuil roulant 60 équipé du système 10. En d'autres termes, l'angle de la roue 40, lors du virage, peut être ajusté selon la vitesse du fauteuil.

En d'autres termes, le contrôleur est configuré pour régler l'angle formé entre le plan principal de la roue 40 et un plan comprenant un axe longitudinal du module moteur 32 en fonction de la vitesse de rotation de la roue 40 autour du premier axe de rotation A₁ par rapport au boitier 30. Par axe longitudinal du module moteur, on entend un axe qui est perpendiculaire à l'axe de rotation des roues principales du fauteuil roulant 60 lorsque le module moteur est monté sur le fauteuil roulant 60.

Selon un mode de réalisation, le contrôleur est configuré pour adapter la commande du deuxième moteur en fonction d'une mesure de la vitesse de rotation de la roue 40 autour du premier axe A₁ par rapport au boitier délivrée par le capteur de vitesse.

De cette manière, on peut avoir un rayon de courbure très court pour faire un virage très prononcé lorsque le fauteuil se déplace lentement et un rayon de courbure plus grand lorsque le fauteuil roulant 60 se déplace à une vitesse plus grande. Cette disposition permet d'éviter de faire des virages trop brusques lorsque le fauteuil roulant 60 se déplace à sa vitesse maximale. De cette manière, on diminue les risques de renversement du fauteuil roulant 60 lors des virages.

Selon un mode de réalisation, le premier moteur 46 est asservi de manière à permettre une traction podale du fauteuil sur lequel est installé le système d'assistance 10.

Par traction podale, on entend le fait pour un utilisateur installé sur le fauteuil 60 d'utiliser ses pieds pour fournir une propulsion au fauteuil. En d'autres termes, l'utilisateur effectue des pas qui vont entrainer le mouvement du fauteuil 60. C'est notamment le type d'utilisation d'un fauteuil roulant 60 qu'ont des personnes ayant encore des capacités musculaires suffisantes pour fournir un effort de propulsion avec leurs pieds, mais insuffisantes pour se tenir debout.

Selon un mode de réalisation, le premier moteur 46 est asservi de manière à assister la traction podale effectuée par l'utilisateur.

Selon un mode réalisation, le premier moteur comprend au moins un capteur de position angulaire autour du premier axe de rotation A₁ de la roue par rapport au boitier 30, ou par rapport à la fourche 44.

La position angulaire mesurée par le capteur est transmise au contrôleur qui transmet une commande au premier moteur en fonction de la position mesurée.

Le capteur permet l'asservissement en position du premier moteur 46.

Selon un mode de réalisation, le premier moteur 46 comprend au moins un capteur de vitesse de rotation de la roue 40 autour du premier axe de rotation par rapport à la fourche 40.

La vitesse mesurée par le capteur est transmise au contrôleur qui transmet une commande au premier moteur en fonction de la vitesse mesurée.

Cette disposition permet l'asservissement en vitesse du premier moteur 46.

Cette disposition permet également de prendre en compte une rotation engagée par la traction podale de l'utilisateur.

Selon un mode de réalisation, le premier moteur comprend au moins un capteur de couple.

Le capteur de couple permet un asservissement en couple de la rotation de la roue 40 par rapport à la fourche 44 autour du premier axe de rotation A₁.

Selon un mode de réalisation, le capteur de couple mesure un couple fourni par l'utilisateur à la roue 40 par le biais de sa traction podale.

La mesure du couple est transmise au contrôleur qui adapte la commande du premier moteur en fonction du couple mesuré.

Selon un mode de réalisation, l'asservissement du premier moteur est adapté à la traction podale fournie par l'utilisateur et adapte le couple fourni par le premier moteur pour que le système 10 fournisse une propulsion accompagnant le mouvement imprimé par l'utilisateur.

Selon un mode de réalisation, la roue 40 comprend au moins un capteur de vitesse de rotation de ladite roue 40 autour du premier axe A₁.

Lors de la traction podale effectuée par l'utilisateur, le capteur de rotation mesure la vitesse de rotation de la roue 40.

Avantageusement, le contrôleur comprend au moins un calculateur intégré à la roue 40.

Ce calculateur est par exemple intégré à la roue 40 reçoit la valeur de vitesse de rotation mesurée par le capteur de vitesse.

Selon un mode de réalisation, le calculateur de la roue 40 commande la rotation de la roue 40 en fonction de la valeur de vitesse mesurée par le capteur.

Selon un mode de réalisation, le calculateur compare la vitesse reçue du capteur de vitesse à un seuil de vitesse prédéfini. Le calculateur commande la rotation du premier moteur de sorte à atteindre la vitesse prédéfinie. En cas de dépassement de la vitesse prédéfinie, le calculateur commande l'arrêt de l'alimentation du premier moteur, la roue 40 est donc en roue libre. Cette disposition permet avantageusement de faciliter le démarrage par traction podale tout en ne dépassant pas un seuil de vitesse prédéfini.

Selon un exemple, le seuil de vitesse prédéfini est inférieur ou égal à 2 kilomètres par heure.

Avantageusement, le capteur de vitesse de la roue est un capteur à effet Hall.

Selon un mode de réalisation, la roue 40 comprend au moins un capteur de couple mécanique au niveau du premier axe de rotation A₁.

Lors de la traction podale effectuée par l'utilisateur, le capteur de couple mesure le couple mécanique fourni par l'utilisateur.

Avantageusement, le calculateur de la roue commande le premier moteur de manière à fournir un couple moteur égal au couple fourni par la traction podale de l'utilisateur. De cette manière, la rotation commandée de la roue suit le mouvement imprimé par la traction podale de l'utilisateur au fauteuil.

Un avantage de l'assistance de la traction podale par le système 10 est de faciliter l'amorçage du mouvement par l'utilisateur tout en évitant de dépasser une vitesse imprimée par l'utilisateur. Cette disposition permet de diminuer la fatigue de l'utilisateur en diminuant l'effort qu'il doit fournir tout en diminuant le risque de blessure de celui-ci.

Selon un mode de réalisation, la roue 40 est entrainée en rotation par le second moteur 48 jusqu'à une orientation angulaire dans laquelle le fauteuil roulant 60 peut tourner sur place. Dans cette configuration, la roue 40 est tournée d'un angle proche de 90° par rapport à la position de ladite roue 40 en ligne droite.

Par position de la roue 40 en ligne droite, on entend la position de la roue 40 dans laquelle son plan principal est perpendiculaire à l'axe de rotation des roues 64 du fauteuil 60.

Cette disposition est particulièrement pratique lorsque le fauteuil roulant 60 doit tourner dans des endroits exigus. La maniabilité du fauteuil 60 est donc grandement améliorée par cette disposition.

### Fixation

Le moyen de fixation amovible 32 du module moteur 20 est avantageusement fixé au boitier 30 ou intégré au boîtier.

La figure 2 représente un module moteur 30 du système d'assistance 10.

Le moyen de fixation amovible 32 comporte de préférence une plaque lui servant de base pour la fixation de celui-ci sur le boitier 30. Avantageusement, la plaque du moyen de fixation amovible 32 est vissée sur le boitier 30.

Selon un mode de réalisation, le moyen de fixation comporte au moins un crochet 34. Le crochet 34 comporte avantageusement un bec qui est la partie d'extrémité dudit crochet 34. Le crochet comporte avantageusement une base qui est la partie d'extrémité du crochet 34 qui est liée à la plaque servant de base au moyen de fixation amovible 32. Le crochet 34 comporte avantageusement un siège, qui est la partie du crochet située entre le bec et la base dans laquelle le crochet 34 est courbé. Cette partie sert à accueillir un élément de la base de fixation 50 pour effectuer la fixation amovible.

Le crochet 34 est configuré pour coopérer avec le moyen d'attache 52 de la base de fixation 50.

Le crochet est une forme avantageuse permettant la reprise d'efforts allant dans le sens d'avance du fauteuil roulant 60 sur lequel le système d'assistance 10 est fixé.

En d'autres termes, le crochet est une forme avantageuse permettant la reprise d'efforts le long d'un axe longitudinal du module moteur 20.

Le crochet 34 est orienté de manière à avoir le bec de celui-ci pointant verticalement vers le bas.

En d'autres termes, le bec du crochet 34 est orienté sensiblement en direction de la roue 40 du module moteur 20. Avantageusement, le siège du crochet 34 forme une surface sensiblement horizontale lorsque le système d'assistance 10 est installé sur un fauteuil roulant 60, et que le fauteuil roulant est posé sur un une surface horizontale. De cette manière, le crochet 34 est à même de reprendre des efforts verticaux lorsque le fauteuil roulant 60 est posé sur une surface horizontale. Le crochet 34 permet donc de cette manière d'assurer l'équilibre du module moteur 30 lorsque celui-ci est fixé sur un fauteuil roulant 60.

Selon un mode de réalisation, le moyen de fixation amovible 32 du module moteur 20 comporte au moins deux crochets 34.

Selon un mode de réalisation, les deux crochets 34 sont placés de manière à être verticalement au même niveau sur le boitier 30, lorsque le système d'assistance 10 est installé sur le fauteuil roulant 60 et que le fauteuil roulant 60 est posé sur une surface horizontale.

Les deux crochets 34 sont seulement décalés horizontalement l'un par rapport à l'autre lorsque le système est fixé sur un fauteuil roulant 60. Avoir deux crochets 34 permet une fixation plus robuste et également d'avoir une plus grande stabilité du module moteur 20 une fois celui-ci fixé sur le fauteuil roulant 60. La présence des deux crochets décalés latéralement permet également de reprendre des couples qui seraient orientés sensiblement selon un axe vertical lorsque le système 10 est fixé au fauteuil 60.

Avantageusement le cadre 62 est un élément tubulaire reliant les deux roues principales du fauteuil.

Le cadre 62 s'étend avantageusement longitudinalement le long d'un axe longitudinal de l'élément tubulaire étant un axe de rotation autour duquel les roues 64 sont destinées à tourner par rapport au cadre du fauteuil 60.

L'élément tubulaire est destiné à être horizontal lorsque le fauteuil roulant 60 est posé sur ses roues 64 sur une surface plane horizontale, telle qu'un sol.

Par horizontale en un point on entend une direction perpendiculaire à la force gravitationnelle en ce point.

L'axe de rotation des roues 64 est de préférence perpendiculaire à un axe principal d'avancement du fauteuil roulant 60.

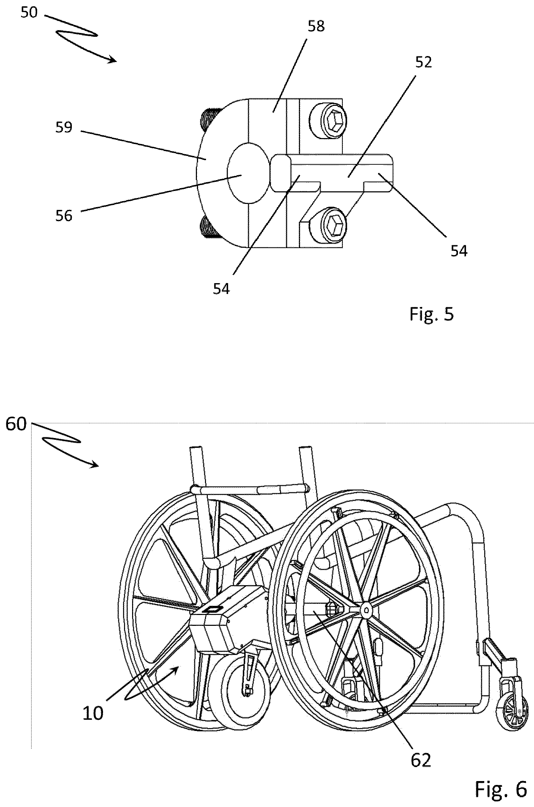

La figure 5 représente une base de fixation 50 d'un système d'assistance 10 selon l'invention. La base de fixation 50 est fixée de préférence sur un élément tubulaire du cadre 62 du fauteuil roulant 60.

Plus précisément, la base de fixation 50 comporte de préférence une cavité 56 dont la taille est adaptée au passage d'un élément tubulaire du cadre 62.

De préférence, la base de fixation 50 est fixée serrée autour de l'élément tubulaire du cadre 62. Ainsi, la base de fixation 50 est fixée en position sur le cadre 62 et peut servir d'élément de fixation du module moteur 20 sur le cadre 62 du fauteuil roulant 60.

Selon un mode de réalisation, une barre transversale est ajoutée sur le cadre du fauteuil roulant 60. Selon ce mode de réalisation, la base de fixation 50 est fixée sur la barre transversale qui est ajoutée sur le cadre 62 du fauteuil roulant 60.

Cette disposition est particulièrement avantageuse lorsque le fauteuil roulant 60 comporte un châssis pliant qui est en forme de croix et n'offre donc pas d'élément tubulaire sensiblement horizontal lorsque le fauteuil est posé sur une surface plane horizontale sur lequel fixer la base de fixation 50.

Selon un mode de réalisation, la base de fixation 50 comporte deux parties détachables 58, 59. La base de fixation 50 comporte une partie de fixation 58 et une partie d'amarrage 59. La partie de fixation 58 comporte le moyen d'attache 52. Une séparation entre la partie d'amarrage 59 et la partie de fixation 58 est formée au niveau de la cavité 56. Plus précisément, la séparation sépare la cavité 56, qui est de forme cylindrique, en deux. La séparation passe par un plan radial du cylindre formé par la cavité 56, pour le couper et former deux demi-cylindres. De cette manière, lors de la fixation de la base de fixation 50 sur le cadre 62, il suffit de séparer les deux parties 58, 59 et de les placer autour de l'élément tubulaire du cadre 62 de manière à enserrer ledit élément tubulaire. De cette manière, la base de fixation 50 forme une mâchoire autour de l'élément tubulaire du cadre 62. Une telle disposition est visible notamment en figures 6 et 7, qui sont des vues du système d'assistance 10 installé sur un fauteuil roulant 60. Avantageusement, la base de fixation comporte au moins un trou taraudé parcourant la partie de fixation 58 et la partie d'amarrage 59. Avantageusement, la base de fixation 50 comporte deux trous taraudés qui parcourent chacun la partie de fixation 58 et la partie d'amarrage 59. La base de fixation 50 comporte au moins une vis, de préférence deux, configurée pour coopérer avec le trou taraudé de la base de fixation 50 pour maintenir ensemble la partie de fixation 50 et la partie d'amarrage 59. De cette manière, il est possible de serrer la base de fixation 50 autour de l'élément tubulaire du cadre 62 du fauteuil roulant 60.

Selon un mode de réalisation, la base de fixation est directement intégrée au cadre 62 du fauteuil roulant 60. De cette manière, aucune installation n'est nécessaire pour la base de fixation 50. On a par exemple un cadre 62 qui comporte directement une partie faisant saillie du corps dudit cadre 62. La partie faisant saillie du cadre comporte le moyen d'attache 52 de la base de fixation 50.

Avantageusement, le système est configuré de sorte que la base de fixation 50 et le moyen de fixation amovible 32 sont destinés à coopérer de façon que le moyen de fixation 32 soit en liaison pivot avec la base de fixation 50 autour d'un axe de rotation du moyen de fixation 32 parallèle à l'axe longitudinal du cadre 62 lorsque le système 10 est monté sur le fauteuil 60, c'est-à-dire sur le cadre 62.

Selon un mode de réalisation, le moyen d'attache 52 de la base de fixation 50 comporte au moins une tige 54. La tige 54 est configurée pour coopérer avec un crochet 34 du moyen de fixation amovible 32 du module moteur 20. Selon un mode de réalisation, le moyen d'attache 52 de la base de fixation 50 comporte au moins deux tiges 54.

Nous allons maintenant décrire l'interaction entre le moyen de fixation amovible 32 du module moteur 20 et le moyen d'attache 52 de la base de fixation 50.

Lorsque la base de fixation 50 est fixée sur le cadre 62 du fauteuil roulant 60, un utilisateur approche le moyen de fixation amovible 32 du moyen d'attache 52. Le ou les crochets 34 du moyen de fixation 32 sont mis en regard avec la ou des tiges 54 du moyen d'attache 52. Les tiges 54 sont ensuite insérées dans la partie des crochets 34 formant les sièges desdits crochets 34. Une fois les tiges 54 insérées, le système est dans la position qui est représentée en figure 1. On peut voir que cette fixation est amovible car les crochets 34 sont facilement insérables et retirables des tiges 54 du moyen d'attache 52. On peut donc effectuer les opérations d'attache et de retrait du module moteur 20 du système d'assistance 10 sans avoir à utiliser d'outillage particulier. Un utilisateur peut donc effectuer cette opération facilement et rapidement. La fixation telle que décrite ici présente aussi l'avantage de fixer efficacement le module moteur 20 et la base de fixation 50, tout en restant légèrement mobile. Cette disposition présente l'avantage de permettre une fixation sans créer de fortes contraintes internes qui pourraient endommager les moyens de fixation. De plus, cette mobilité fournie par la fixation permet de garder en permanence le contact entre la roue 40 et le sol sur lequel le fauteuil roulant se déplace.

Avantageusement, ce moyen d'attache 52 de la base de fixation 50 permet un mouvement de rotation du module moteur 20 permettant un mouvement vertical de la roue 4, relativement à un sol sur lequel le fauteuil repose. De cette manière, cette rotation permet un mouvement de la roue 40 permettant de surélever le module moteur 20 pour passer des obstacles qui seraient sur son chemin.

Avantageusement, cette rotation s'effectue autour d'un axe parallèle à l'axe de rotation des roues principales 64 du fauteuil roulant 60 sur lequel le système 10 est installé.

Selon un mode de réalisation, le moyen de fixation amovible comprend un aimant. L'aimant permet par interaction électromagnétique de créer une force de maintien entre le moyen de fixation 32 et le moyen d'attache 52. Alternativement ou additionnellement, le moyen d'attache 52 de la base de fixation 50 comprend un aimant pour créer une force de maintien entre le moyen d'attache 52 et le moyen de fixation amovible 32.

Avantageusement, le moyen d'attache comporte au moins en partie un matériau ferromagnétique. De cette manière, une force d'attraction est créée entre l'aiment et le moyen d'attache.

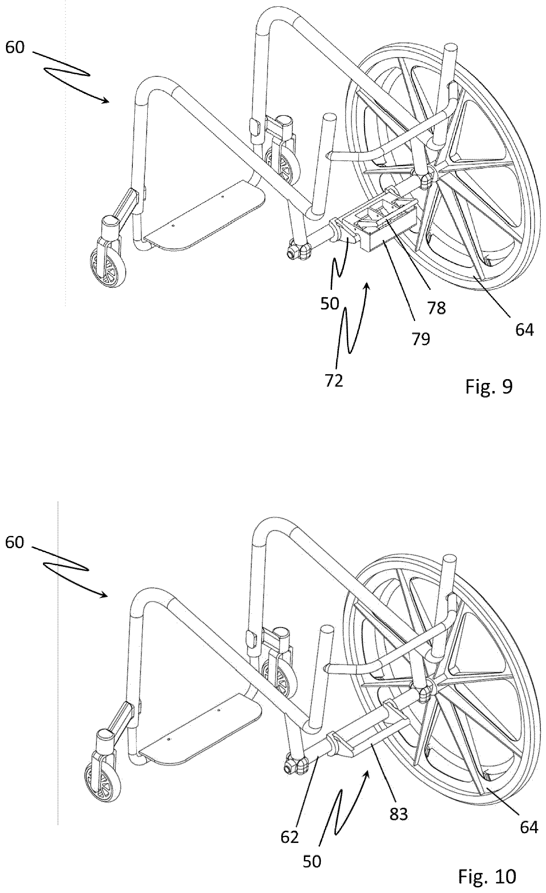

La figure 9 présente un exemple de moyen de fixation 72 selon un deuxième mode de réalisation. Sur cette figure, le reste du module moteur n'est pas représenté et le fauteuil 60 n'est représenté que partiellement.

La figure 10 présente un exemple de base de fixation 80 comportant une barre 83 telle selon le deuxième mode de réalisation. Sur cette figure, le fauteuil 60 n'est représenté que partiellement.

Avantageusement la barre de fixation 83 est allongée selon un axe longitudinal de la barre de fixation sensiblement parallèle à l'axe longitudinal du cadre 62 lorsque la base de fixation 80 est fixée au cadre 62.

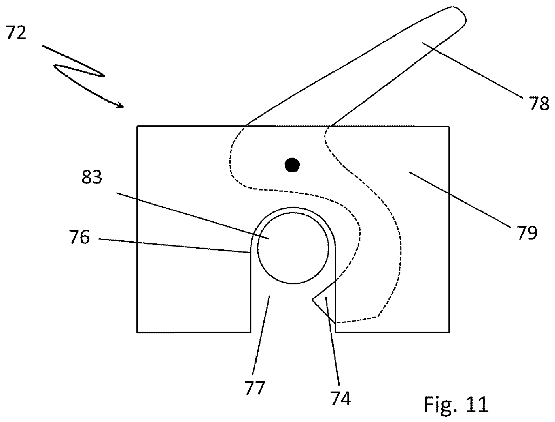

La figure 11 représente une vue de profil du moyen de fixation amovible 72 et une partie de la base de fixation 80. Ce mode de réalisation diffère du précédent en ce que le moyen de fixation 72 comporte un crochet 74 mobile.

Le moyen de fixation 72 et la base de fixation 80 sont destinées à coopérer pour établir une liaison pivot entre le moyen de fixation 72 et la base de fixation 80.

Selon le deuxième mode de réalisation, le moyen d'attache 82 de la base de fixation 80 comporte au moins une barre de fixation 83.

Le moyen de fixation amovible 72 comporte au moins un crochet 74 mobile par rapport à un bâti 79 dudit moyen de fixation amovible 72. Avantageusement, le moyen de fixation amovible 72 comprend au moins une butée 76. Le crochet 74 est de préférence mobile entre une première position dans laquelle il est distant de la butée et une deuxième position dans laquelle il est plus rapproché de la butée.

Par exemple, le crochet 74 est mobile en rotation par rapport au bâti 79 autour d'un axe de rotation du crochet 74.

Avantageusement, l'axe de rotation du crochet 74 est sensiblement parallèle à l'axe de rotation de la liaison pivot lorsque la liaison pivot amovible entre le moyen de fixation amovible 72 et la base 80 est formée.

Par exemple, l'axe de rotation est destiné à être sensiblement parallèle à l'axe longitudinal de la barre 83 lorsque la liaison pivot amovible entre le moyen de fixation amovible 72 et la base 80 est formée.

Selon un mode de réalisation, le moyen de fixation amovible et plus particulièrement l'ensemble formé par la butée 76, le crochet 74 et le bâti 79 forme une mâchoire comprenant une cavité 77 destinée à recevoir la barre 83, la mâchoire étant configurée pour enserrer la barre 83 de la base de fixation 80 reçue dans la cavité lorsque le crochet est dans la deuxième position.

Ainsi, lorsque le crochet 74 est dans la première position, il est possible de disposer le moyen de fixation amovible 72 autour de la barre 83 c'est-à-dire d'insérer la barre 83 dans la cavité 77, la butée s'étendant d'un côté de la barre et le crochet s'étendant d'un autre côté de la barre. Ensuite, le crochet 34 est placé dans sa deuxième position de façon que le moyen de fixation amovible enserre la barre 83 de sorte à établir la liaison pivot entre le moyen de fixation amovible 72 et la base 80.

Ainsi, le module moteur 20 est maintenu sur la base de fixation 80.

Selon un mode de réalisation, le crochet 74 est solidaire d'une poignée 78. La poignée 78 permet avantageusement de saisir le module moteur afin de le porter, et/ou de l'attacher ou le détacher de la base de fixation 80.

Avantageusement, l'ensemble formé par le crochet 74 et la poignée 78 est fixé sur le bâti 79 par une liaison pivot d'axe parallèle à un axe longitudinal de la barre 83 lorsque le moyen de fixation amovible 72 et la base de fixation 80 sont liés.

De cette manière, lorsque l'utilisateur saisit la poignée pour porter le module moteur 20, le crochet 74 entre en rotation pour passer de la deuxième position à la première position sous l'effet du poids du module moteur 20. Ainsi, lorsque le module moteur 20 est fixé sur la base de fixation, le fait que l'utilisateur saisisse la poignée pour porter ledit module désengage le crochet 74 et libère la fixation du module moteur 20 sur la base de fixation 50.

Selon un mode de réalisation, le module moteur 20 comporte au moins une béquille.

Par béquille, on entend une pièce mécanique sensiblement en forme de tige qui est mobile par rapport au boitier 30 entre une position rétractée et une position déployée. Lorsque la béquille est en position déployée, elle forme un appui pour le module moteur 20 lui permettant de tenir en place lorsqu'il est posé sur le sol.

Selon un mode de réalisation, la béquille est en position rétractée disposée le long du boitier 30. Selon un mode de réalisation, la béquille est liée au boitier 30 par une liaison pivot. De cette manière, la béquille bascule entre la position déployée et la position rétractée par rotation autour de l'axe du pivot par rapport à au boitier 30.

Selon un mode de réalisation, la béquille est reliée à la poignée 78. Selon ce mode de réalisation, la béquille bascule automatiquement de la position rétractée à la position déployée lorsque l'utilisateur porte le module moteur 20 par la poignée.

Selon un mode de réalisation, le module moteur 20 comporte au moins deux béquilles.

Selon un mode de réalisation, la ou les béquilles sont amovibles. En d'autres termes, la ou les béquilles sont montées de manière amovible ou démontable sur le boitier. De cette manière, un utilisateur peut décider de les retirer du module moteur s'il n'en a pas l'usage.

### Contrôle et interfaces

Le système d'assistance 10 comporte avantageusement un contrôleur configuré pour commander le fonctionnement du premier moteur 46 et/ou le fonctionnement du second moteur 48. Plus précisément, le contrôleur contrôle l'asservissement des moteurs électriques 46, 48.

Selon un mode de réalisation, le contrôleur comprend un ensemble d'au moins un calculateur. Le calculateur est configuré pour recevoir des informations du ou des capteurs du système 10. Avantageusement, l'ensemble d'au moins un calculateur est configuré pour commander le premier moteur 46 et/ou le deuxième moteur 48 en fonction des informations fournies par les capteurs.

Selon un mode de réalisation, le contrôleur comprend une interface utilisateur permettant à un utilisateur de contrôler la rotation de la roue 40 selon le premier axe de rotation A₁ et selon le deuxième axe de rotation A₂. Ainsi, l'interface permet à l'utilisateur de contrôler la vitesse et la trajectoire du fauteuil roulant 60 sur lequel le système d'assistance 10 est installé.

Autrement dit, l'interface utilisateur permet à un utilisateur de transmettre une information d'entrée au contrôleur et plus particulièrement à un calculateur de l'ensemble d'au moins un calculateur. L'information envoyée au contrôleur et plus particulièrement au calculateur permet au calculateur de générer des commandes à destination du premier moteur et/ou du deuxième moteur.

Selon un mode de réalisation, l'interface utilisateur est fixée sur le fauteuil roulant 60, de préférence à proximité d'un accoudoir ou d'une zone vers laquelle le bras d'un utilisateur se trouve lorsque celui-ci est assis sur le fauteuil roulant 60.

Selon un mode de réalisation, l'interface utilisateur est fixée de manière amovible sur le fauteuil roulant 60.

Selon un mode de réalisation, l'interface utilisateur est fixée de façon inamovible le fauteuil roulant 60.

Selon un mode de réalisation, l'interface utilisateur peut être décrochée du fauteuil roulant 60. Selon un mode de réalisation, l'interface utilisateur est une télécommande. Cette disposition permet à l'utilisateur de tenir l'interface utilisateur dans sa main. Selon un mode de réalisation, l'interface utilisateur comprend un accéléromètre. L'accéléromètre contrôle de préférence le fonctionnement du système 10. Cette disposition permet à l'utilisateur de contrôler le mouvement du fauteuil 60 en inclinant l'interface utilisateur. Selon un mode de réalisation, l'interface utilisateur comporte un manche à balai ou « joystick » permettant à l'utilisateur de contrôler la trajectoire du fauteuil roulant 60.

Selon un mode de réalisation, le contrôleur comporte un pavé tactile. Un pavé tactile est une surface, généralement rectangulaire, sur laquelle l'utilisateur peut agir de manière tactile avec un doigt. Avantageusement, la position du doigt de l'utilisateur sur le pavé tactile permet de contrôler la vitesse du fauteuil. Avantageusement, la position du doigt de l'utilisateur sur le pavé tactile permet de contrôler la direction donnée au fauteuil 60.

Selon un mode de réalisation, le contrôleur est relié de manière filaire au module moteur 20. Selon un mode de réalisation, le contrôleur comporte au moins un aimant configuré pour coopérer avec un aimant d'un câble de connexion. De cette manière, lorsque l'on branche le câble à la connexion électrique, celui-ci est maintenu dans la connexion par interaction magnétique. De la même manière, un arrachement brusque du câble de la connexion est possible sans endommager le câble et/ou la connexion électrique. Le câble permet ainsi de transmettre les informations de contrôle des moteurs électriques 46, 48. Selon un mode de réalisation, et lorsque la batterie du système d'assistance 10 est située sur le fauteuil roulant 60, la batterie est reliée de manière filaire au module moteur 20. La batterie alimente donc électriquement les premier et deuxième moteurs 46, 48.

Selon un mode de réalisation, le contrôleur est relié au module moteur 20 par un câble passant à proximité du moyen de fixation amovible 32 et à proximité du moyen d'attache 52 de la base de fixation 50. Selon un mode de réalisation, le boitier 30 comporte un connecteur permettant la connexion du câble reliant le contrôleur au module moteur. Selon un mode de réalisation, le connecteur du boitier 30 comporte un moyen de fixation magnétique permettant le déploiement d'une force de maintien maintenant le connecteur du boitier 30 et une extrémité de connexion du câble. Avantageusement, le moyen de fixation magnétique est un aimant. Selon un mode de réalisation, l'extrémité de connexion du câble comporte un moyen de fixation magnétique permettant le déploiement d'une force de maintien maintenant le connecteur du boitier 30 et l'extrémité de connexion du câble. Avantageusement, le moyen de fixation magnétique est un aimant. Selon un mode de réalisation, le moyen de fixation amovible 32 comprend un connecteur. De cette manière, la connexion est effectuée directement sur le moyen de fixation amovible. Le connecteur du moyen de fixation amovible est relié par fil aux moteurs électriques 46, 48 et à tous les équipements électroniques à commander dans le module moteur 20.

Selon un mode de réalisation, la base de fixation et/ou le moyen de fixation amovible comprend un capteur magnétique de présence. Le capteur magnétique est configuré pour détecter la présence du moyen de fixation amovible sur la base de fixation.

Selon un mode de réalisation, une information de présence est fournie par le capteur magnétique au contrôleur.

Le système peut comprendre des moyens d'acheminement du signal de présence du capteur vers l'interface utilisateur. Ces moyens peuvent être des moyens électriques tels qu'un câble électrique ou une interface sans fil.

Selon un mode de réalisation, l'information de présence est transmise à l'interface utilisateur par l'unité centrale.

Avantageusement, l'interface utilisateur comprend un écran.

L'interface utilisateur peut être configurée pour afficher un indicateur, tel qu'un voyant ou un symbole permettant à un utilisateur de vérifier la bonne installation du module moteur sur la base de fixation.

Notamment, l'interface utilisateur est configurée pour afficher une information de présence du module moteur et possiblement toute autre information susceptible d'être reçue par l'interface utilisateur.

Selon un mode de réalisation, l'interface utilisateur comprend au moins un témoin lumineux, telle une diode électroluminescente. Dans ce cas, la diode électroluminescente s'allume lorsque l'interface utilisateur reçoit l'information de présence.

Selon un mode de réalisation, l'écran présente toute information utile à l'utilisateur concernant le fonctionnement du système. Selon un exemple, l'écran affiche un état de charge de la batterie du système.

Selon un exemple de réalisation, l'interface utilisateur comprend une commande permettant de réaliser la fonction d'interrupteur pour mettre sous tension la batterie et/ou plus généralement toute source d'énergie alimentant le module moteur. Une telle commande peut être engagée soit par un actionneur mécanique ou une commande numérique de l'interface utilisateur.

Selon un mode de réalisation, le moyen d'attache 52 de la base de fixation 50 comprend un connecteur. Le connecteur de la base de fixation est relié de manière filaire au contrôleur et/ou à la batterie. Avantageusement, le moyen d'attache 52 et le moyen de fixation comportent chacun un connecteur. Lors de l'assemblage du module moteur 20 sur la base de fixation, les deux connecteurs sont mis en contact. De ce fait, le module moteur 20 et le contrôleur sont reliés par fil. Cette disposition est particulièrement avantageuse car elle permet en une seule et même opération d'assemblage de connecter mécaniquement le module moteur 20 avec le fauteuil 60 et de connecter électriquement le module moteur avec les équipements présents sur le fauteuil 60. De tels équipements sont par exemple le contrôleur et/ou la batterie, lorsque celle-ci est située sur le fauteuil.

Selon un mode de réalisation, le contrôleur est relié par une connexion sans fil au module moteur 20. Cette disposition permet d'éviter de faire passer une connexion filaire entre le fauteuil roulant 60 et le module moteur 20. Cette disposition permet également de faciliter l'utilisation d'une télécommande comme contrôleur. De cette manière, l'utilisateur peut directement tenir le contrôleur dans sa main, sans que celui-ci ne soit fixé ou relié au fauteuil roulant 60 par un câble.

Selon un mode de réalisation, la connexion sans fils est une connexion par ondes radio. Selon un mode de réalisation, la connexion sans fil est une connexion par protocole Bluetooth^{®}. Selon un mode de réalisation, la connexion sans fil est une connexion par ondes wifi.

Selon un mode de réalisation, le contrôleur est un téléphone intelligent, autrement désigné sous l'anglicisme « smartphone ». L'avantage est de permettre d'avoir un contrôle du système d'assistance par son téléphone sans avoir à installer sur le fauteuil roulant 60 de contrôleur externe. Selon un exemple, le téléphone comporte une application permettant le contrôle sans fil des éléments contrôlables du système d'assistance 10.

Selon un exemple, le téléphone peut se connecter au système d'assistance 10 via une connexion décrite plus haut. Le téléphone se connecte à une page web permettant le contrôle du système d'assistance 10, notamment le contrôle du mouvement du fauteuil roulant 60 sur lequel le système 10 est installé.

Selon un mode de réalisation, une interface de contrôle est affichée sur l'écran du téléphone intelligent. L'interface de contrôle comporte avantageusement plusieurs flèches directionnelles permettant par interaction tactile de contrôler l'avance, le recul et la rotation du fauteuil 60 pour effectuer des virages. En d'autres termes, les flèches directionnelles permettent de contrôler le fonctionnement du premier moteur électrique 46 et du deuxième moteur électrique 48. Selon un exemple, l'interface comporte une zone tactile faisant office de pavé tactile pour le contrôle du système d'assistance 10. Le pavé tactile permet de définir l'avance, le recul et la rotation du fauteuil roulant 60 sur lequel le système est installé. Le pavé tactile permet avantageusement à l'utilisateur de contrôler également la vitesse du système d'assistance 10, en avançant plus ou moins son doigt sur ledit pavé. De même, l'utilisateur peut contrôler l'angle de la rotation de la roue 40 selon le deuxième axe de rotation A₂ en déplaçant plus ou moins son doigt sur le pavé tactile par rapport à un point central dudit pavé.

### Nomenclature :

10 : système d'assistance pour fauteuil roulant manuel
20 : module moteur du système d'assistance
30 : boitier
32 : moyen de fixation amovible
34 : crochet du moyen de fixation
36 : butée du moyen de fixation
40 : roue
41 : arbre de rotation de la roue
42 : pneu de la roue
44 : fourche
46 : premier moteur
48 : second moteur
50 : base de fixation
52 : moyen d'attache de la base de fixation
54 : tige du moyen d'attache
56 : cavité du moyen d'attache
58 : partie de fixation de la base de fixation
59 : partie d'amarrage de la base de fixation
60 : fauteuil roulant manuel
62 : cadre du fauteuil roulant manuel
64 : roues principales du fauteuil roulant
70 : boitier selon un deuxième mode de réalisation de l'invention
72 : moyen de fixation amovible selon le deuxième mode de réalisation
74 : crochet du moyen de fixation amovible selon le deuxième mode
76 : butée
77 : cavité du moyen de fixation amovible
78 : poignée
79 : bâti du moyen de fixation amovible
80 : base de fixation selon le second mode de réalisation
82 : moyen d'attache de la base de fixation selon le deuxième mode de
réalisation
83 : barre de la base de fixation
A₁ : premier axe de rotation
A₂ : deuxième axe de rotation
C : point central de la roue

## Revendications

1. Système d'assistance (10) pour fauteuil roulant manuel (60) **caractérisé en ce qu'**il comporte une base de fixation (50) configurée pour être fixée sur un cadre (62) de fauteuil roulant manuel (60), une batterie, un module moteur (20), ledit module moteur (20) comportant :
▪ un boitier (30) ;
▪ un moyen de fixation amovible (32) configuré pour coopérer avec un moyen d'attache (52) de la base de fixation (50) ;
▪ une roue (40) fixe en translation par rapport au boitier (30) ;
▪ au moins un premier moteur électrique (46) ;
le premier moteur électrique (46) étant configuré pour entraîner la roue (40) en rotation selon un premier axe de rotation (A₁), le système d'assistance (10) comportant en outre un moyen de contrôle du premier moteur (46) ;
le système d'assistance (10) comportant en outre un second moteur électrique (48) configuré pour entrainer la roue (40) en rotation selon un second axe de rotation (A₂) perpendiculaire au premier axe.

2. Système d'assistance (10) selon la revendication précédente, dans lequel la roue (40) est en contact avec une surface d'un sol sur lequel le fauteuil roulant (60) est posé lorsque le module moteur (20) est attaché à la base de fixation (50).

3. Système d'assistance (10) selon la revendication précédente dans lequel le premier moteur (46) est intégré à la roue (40).

4. Système d'assistance (10) selon l'une quelconque des revendications précédentes, dans lequel le second moteur (48) est intégré au boitier (30).

5. Système d'assistance (10) selon l'une quelconque des revendications précédentes, dans lequel le moyen de fixation amovible (32) comporte au moins un crochet (34), et dans lequel le moyen d'attache (52) comporte au moins une tige (54) configurée pour coopérer avec le crochet (34) et de sorte à lier le moyen de fixation amovible et le moyen d'attache de façon amovible.

6. Système d'assistance (10) selon l'une quelconque des revendications précédentes dans lequel le premier axe de rotation (A₁) de la roue (40) est perpendiculaire à un plan principal de ladite roue (40), et dans lequel le premier moteur électrique (46) est asservi en vitesse, en position et/ou en couple pour entrainer la rotation de la roue (40) autour du premier axe de rotation par rapport au boitier dans un premier sens et/ou dans un deuxième sens opposé au premier sens.

7. Système d'assistance (10) selon la revendication précédente dans lequel le freinage par le premier moteur (46) est un freinage régénératif permettant la recharge de la batterie du système d'assistance (10).

8. Système d'assistance (10) selon l'une des revendications précédentes qui comporte un contrôleur configuré pour commander la rotation et/ou le freinage du premier moteur (46).

9. Système d'assistance (10) selon la revendication précédente dans lequel le moyen de fixation amovible (32) et/ou le moyen d'attache (52) comporte au moins un aimant configuré pour maintenir un contact entre un contacteur du moyen d'attache (52) et un contacteur du moyen de fixation amovible (32).

10. Système d'assistance (10) selon l'une des revendications 8 ou 9 comprenant une interface utilisateur permettant à un utilisateur d'envoyer au moins une valeur consigne, le contrôleur étant configuré pour commander le fonctionnement du premier moteur (46) en fonction de la valeur consigne.

11. Fauteuil roulant manuel (60) **caractérisé en ce qu'**il comporte un système d'assistance (10) selon l'une quelconque des revendications précédentes et dans lequel la base de fixation (50) est fixée sur un cadre (62) du fauteuil roulant manuel.

## Patentansprüche

1. Assistenzsystem (10) für manuellen Rollstuhl (60), **dadurch gekennzeichnet, dass** es eine zum Befestigen am Rahmen (62) eines manuellen Rollstuhls (60) eingerichtete Befestigungsbasis (50), eine Batterie und ein Motormodul (20) umfasst, wobei das Motormodul (20) Folgendes umfasst:
▪ ein Gehäuse (30);
▪ ein abnehmbares Befestigungsmittel (32), das so eingerichtet ist, dass es mit einem Verbindungsmittel (52) der Befestigungsbasis (50) zusammenpasst;
▪ ein zum Gehäuse (30) feststehendes Rad (40);
▪ mindestens einen ersten Elektromotor (46);
wobei der erste Elektromotor (46) so eingerichtet ist, dass er das Rad (40) entlang einer ersten Drehachse (A₁) in Drehung versetzt, wobei das Assistenzsystem (10) ferner ein Steuermittel für den ersten Motor (46) umfasst;
wobei das Assistenzsystem (10) ferner einen zweiten Elektromotor (48) umfasst, der so eingerichtet ist, dass er das Rad (40) entlang einer zweiten Drehachse (A₂) senkrecht zur ersten Achse in Drehung versetzt.

2. Assistenzsystem (10) nach dem vorhergehenden Anspruch, wobei das Rad (40) eine Oberfläche eines Bodens berührt, auf dem der Rollstuhl (60) aufliegt, wenn das Motormodul (20) mit der Befestigungsbasis (50) verbunden ist.

3. Assistenzsystem (10) nach dem vorhergehenden Anspruch, wobei der erste Motor (46) in das Rad (40) integriert ist.

4. Assistenzsystem (10) nach einem der vorhergehenden Ansprüche, wobei der zweite Motor (48) in das Gehäuse (30) integriert ist.

5. Assistenzsystem (10) nach einem der vorhergehenden Ansprüche, wobei das abnehmbare Befestigungsmittel (32) mindestens einen Haken (34) aufweist, und wobei das Verbindungsmittel (52) mindestens einen Stab (54) aufweist, der so eingerichtet ist, dass er mit dem Haken (34) zusammenpasst und das abnehmbare Befestigungsmittel und das Verbindungsmittel lösbar verbindet.

6. Assistenzsystem (10) nach einem der vorhergehenden Ansprüche, wobei die erste Drehachse (A₁) des Rads (40) senkrecht zu einer Hauptebene des Rads (40) steht und wobei Drehzahl, Position und/oder Drehmoment des ersten Elektromotors (46) so geregelt werden, dass die Drehung des Rads (40) um die erste Drehachse in Bezug auf das Gehäuse in einer ersten Richtung und/oder in einer zweiten Richtung entgegengesetzt zur ersten Richtung angetrieben wird.

7. Assistenzsystem (10) nach dem vorhergehenden Anspruch, wobei die Bremsung durch den ersten Motor (46) eine regenerative Bremsung ist, die das Aufladen der Batterie des Assistenzsystems (10) ermöglicht.

8. Assistenzsystem (10) nach einem der vorhergehenden Ansprüche, das eine Steuerung umfasst, die so eingerichtet ist, dass sie die Drehung und/oder das Bremsen des ersten Motors (46) steuert.

9. Assistenzsystem (10) nach dem vorhergehenden Anspruch, wobei das abnehmbare Befestigungsmittel (32) und/oder das Verbindungsmittel (52) mindestens einen Magneten aufweist, der so eingerichtet ist, dass er einen Kontakt zwischen einem Schalter des Verbindungsmittels (52) und einem Schalter des abnehmbaren Befestigungsmittels (32) aufrechterhält.

10. Assistenzsystem (10) nach einem der Ansprüche 8 oder 9, das eine Benutzerschnittstelle umfasst, mit der ein Benutzer mindestens einen Sollwert senden kann, wobei die Steuerung so eingerichtet ist, dass sie den Betrieb des ersten Motors (46) in Abhängigkeit vom Sollwert steuert.

11. Manueller Rollstuhl (60), **dadurch gekennzeichnet, dass** er ein Assistenzsystem (10) nach einem der vorhergehenden Ansprüche aufweist und wobei die Befestigungsbasis (50) an einem Rahmen (62) des manuellen Rollstuhls befestigt ist.

## Claims

1. An assistance system (10) for a manual wheelchair (60) **characterized in that** it comprises a fastening base (50) configured for being fixed to a frame (62) of a manual wheelchair (60), a battery, a motor module (20), said motor module (20) comprising :
▪ A housing (30) ;
▪ a removable fastening means (32) configured to cooperate with an attachment means (52) of the fastening base (50);
▪ a wheel (40) fixed in translation relative to the housing (30);
▪ at least one first electric motor (46);
the first electric motor (46) being configured to drive the first wheel (40) in rotation about a first axis of rotation (A₁), the assistance system (10) further comprising means for controlling the first motor (46);
the assistance system (10) further comprises a second electric motor (48) configured to drive the wheel (40) in rotation about a second axis of rotation (A₂) perpendicular to the first axis.

2. The assistance system (10) according to the preceding claim, in which the wheel (40) is in contact with a surface of a floor on which the wheelchair (60) is placed when the motor module (20) is attached to the fastening base (50).

3. The assistance system (10) according to the preceding claim, in which the first motor (46) is integrated into the wheel (40).

4. The assistance system (10) according to one of the preceding claims, in which the second motor (48) is integrated with the housing (30).

5. The assistance system (10) according to one of the preceding claims, in which the removable fastening means (32) comprises at least one hook (34), and in which the attachment means (52) comprises at least one rod (54) configured to cooperate with the hook (34) to connect the removable fastening means and the attachment means in a removable manner.

6. The assistance system (10) according to one of the preceding claims, in which the first axis of rotation (A₁) of the wheel (40) is perpendicular to a principal plane of said wheel (40), and in which the first electric motor (46) is controlled in speed, position and/or torque to drive the rotation of the wheel (40) about the first axis of rotation with respect to the housing in a first direction and/or in a second direction opposite to the first direction.

7. The assistance system (10) according to the preceding claim, in which braking by the first motor (46) is regenerative braking for recharging the battery of the assistance system (10).

8. The assistance system (10) according to one of the preceding claims, which comprises a controller configured to control the rotation and/or braking of the first motor (46).

9. The assistance system (10) according to the preceding claim in which the removable fastening means (32) and/or the attachment means (52) comprises at least one magnet configured to maintain contact between a contactor of the attachment means (52) and a contactor of the removable fastening means (32).

10. The assistance system (10) according to one of claims 8 or 9, comprising a user interface enabling a user to send at least one setpoint, the controller being configured to control operation of the first motor (46) as a function of the setpoint.

11. Manual wheelchair (60) **characterized in that** it comprises the assistance system (10) according to any of the preceding claims and in which the fastening base (50) is fixed to a frame (62) of the manual wheelchair.
